# EUROPÄISCHE PATENTSCHRIFT

(11) **EP 1 041 298 B1**
(45) Veröffentlichungstag und Bekanntmachung des Hinweises auf die Patenterteilung: **06.10.2004**
(21) Anmeldenummer: 00106819.6
(22) Anmeldetag: 30.03.2000
(51) Int. Cl.: F16B 12/24, F16B 19/10, F16B 13/04

(54) **Montageeelement, insbesondere für den Möbelbau**
Mounting element, particularly for use in furniture manufacture
Elément de montage, utilisé notamment dans la fabrication de meubles

(30) Priorität: 01.04.1999 DE 19915119; 21.10.1999 DE 19950746
(43) Veröffentlichungstag der Anmeldung: 04.10.2000
(73) Patentinhaber: KARL SIMON GmbH & Co. KG, D-78733 Aichhalden (DE)
(72) Erfinder: Bantle, Ulrich, 72186 Empfingen (DE)
(74) Vertreter: Fleck, Hermann-Josef, Dr.-Ing.

(56) Entgegenhaltungen:
- DE-A- 2 149 502
- DE-U- 9 106 455
- US-A- 4 188 685

## Beschreibung

Die Erfindung betrifft ein Montageelement gemäß dem Oberbegriff des Anspruchs 1, zum Befestigen eines Beschlagteils in einer Bohrung eines Werkstückes insbesondere für den Möbelbau, vgl. US-A-4 188 685.

Gerade im Möbelbau werden die verschiedenartigsten Montageelemente zum Verbinden von Möbelteilen oder zum Anbringen von Beschlagteilen an einem Möbelteil benötigt. Dabei ist die Bohrung im Möbelteil oft als Sacklochbohrung ausgebildet und das Montageelement ist zweiteilig, wobei ein Teil in die Bohrung des Möbelteils eingesetzt und darin festgelegt ist. Das in das Möbelteil eingesetzte Teil ist dabei i.d.R. topfartig ausgebildet und hält alleine durch Passoder Presssitz in der Bohrung des Möbelteiles.

Es ist Aufgabe der Erfindung ein Montageelement zu schaffen, mit dem sich Beschlagteile auf einfache Weise montieren lassen.

Diese Aufgabe wird mit dem Montageelement gemäß Anspruch 1 gelöst. Der Verbindungszapfen kann in die bereits in der Bohrung des Werkstückes befindliche Befestigungshülse eingeschoben werden. Hierdurch lässt sich über den Verbindungszapfen und die Befestigungshülse eine Anbindung an das Werkstück erreichen. Da das Beschlagteil einstückig an den Verbindungszapfen angekoppelt ist, kann auf separate Befestigungselemente und Befestigungsschritte zum Anbinden des Beschlagteiles verzichtet werden.

Um den Halt zwischen der Befestigungshülse und der Innenwandung der Bohrung des Werkstückes zu verbessern, können die Halteschenkel der Befestigungshülse im Bereich ihrer Außenseiten mit Zahnungen versehen sein. Die Zahnungen graben sich beim Einschieben des Verbindungszapfens in die Innenwandung der Bohrung ein und stellen so einen Formschluss her.

Damit das Einschieben des Verbindungszapfens in die Befestigungshülse mit möglichst geringem Kraftaufwand vonstatten gehen kann, ist es gemäss einer Erfindungsausgestaltung vorgesehen, dass der Verbindungszapfen eine glatte Gleitfläche aufweist, die auf einer ebenfalls glatten Innenwandung der Befestigungshülse beim Einschieben des Verbindungszapfens in die Befestigungshülse abgleitet.

Eine weitere Verminderung der Reibwirkung zwischen dem Verbindungszapfen und der Befestigungshülse kann dadurch erreicht werden, dass die Gleitfläche des Verbindungszapfens und die Innenwandung der Befestigungshülse in geeigneter Materialpaarung ausgewählt sind.

Dabei kann ein Montageelement insbesondere dergestalt sein, dass der Verbindungszapfen und/oder die Befestigungshülse eine Auslösevorrichtung aufweist, mittels der die Verbindung zwischen dem Verbindungszapfen und der Befestigungshülse aufhebbar ist. Insbesondere kann die Verbindung zwischen der Befestigungshülse und dem Verbindunszapfen formschlüssig ausgebildet sein. Bei dieser Ausgestaltung ist verhindert, dass der Verbindungszapfen unbeabsichtigt in die Befestigungshülse eingeschoben werden kann. Die Auslösevorrichtung stellt sicher, dass der Verbindungszapfen erst im gewünschten Augenblick freigegeben wird.

Eine mögliche Erfindungsvariante zeichnet sich dadurch aus, dass die Halteschenkel im Bereich ihrer freien Enden mit einer Auflaufschräge versehen sind. Wenn die Befestigungshülse in die Bohrung des Werkstückes eingefügt wird, so gleiten die Auflaufschrägen beispielsweise am Bohrungseintritt auf, wodurch die Halteschenkel aufeinanderzubewegt werden. Diese Verstellung der Halteschenkel kann dann genutzt werden, um die Verbindung zwischen dem Anschlag des Verbindungszapfens und dem Absatz der Befestigungshülse aufzuheben.

Eine bevorzugte Erfindungsausgestaltung sieht vor, dass der Verbindungszapfen bei aufgehobener formschlüssiger Verbindung zwischen Verbindungszapfen und Befestigungshülse (Absatz des Verbindungszapfens und Anschlag der Befestigungshülse) an einer Formfläche der Befestigungshülse gehalten ist, wobei die an der Formfläche erzeugte Haltekraft grösser ist, als die zum Einsetzen der Befestigungshülse in die Bohrung des Werkstückes erforderliche Fügekraft. Diese Massnahme stellt sicher, dass der Verbindungszapfen nicht in die Befestigungshülse eingedrückt werden kann, bevor diese vollständig in die Bohrung des Werkstückes eingesetzt ist.

Ein mögliches erfindungsgemässes Montageelement kann dadurch gekennzeichnet sein, dass die Befestigungshülse an ihrem dem Befestigungsteil zugewandten Endbereich ein Federelement aufweist, das gegen eine Anlagefläche des Befestigungsteiles in Achsrichtung des eingedrückten Verbindungszapfen verspannt ist. Das Federelement gleicht ein eventuell zwischen Verbindungszapfen und Befestigungshülse vorhandenes Spiel aus.

Wenn vorgesehen ist, dass die Befestigungshülse einen Passbund aufweist, dessen Aussendurchmesser gegenüber dem Innendurchmesser der Bohrung ein Übermass aufweist, dass die Befestigungshülse im Bereich ihres Passbundes an der Bohrung radial nach innen verformbar ist, und dass der in der Aufnahme der Befestigungshülse eingesteckte Verbindungszapfen im Bereich des Passbundes infolge der Verformung der Befestigungshülse geklemmt gehalten ist, so wird eine wackelfreie Verspannung des Verbindungszapfens möglich.

Die Erfindung wird im Folgenden anhand eines in den Zeichnungen dargestellten Auführungsbeispieles näher erläutert. Es zeigen:
- Fig. 1: einen Verbindungszapfen in Seitenansicht und im Schnitt,
- Fig. 2: eine Befestigungshülse in Seitenansicht, und
- Fig. 3: eine Baueinheit bestehend aus Befestigungshülse, Verbindungszapfen und einem an den Verbindungszapfen angeformtes Beschlagteil in Seitenansicht und im Teilschnitt

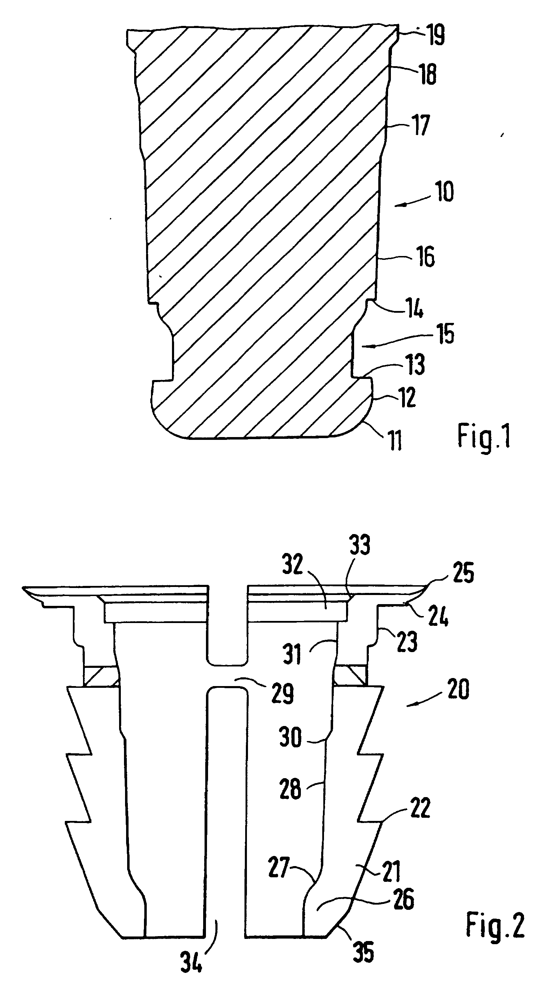

In der Fig. 1 ist ein Verbindungszapfen 10 gezeigt, der als rotations-symmetrisches Bauteil (beispielsweise als Spritzgussteil) gefertigt ist. Der Verbindungszapfen 10 ist einstückig an ein Beschlagteil 40 angeformt. Das Beschlagteil 40 kann ein Griff, ein Möbelschloss, ein Drehstangenverschluss etc. sein. An dem dem Beschlagteil 40 zugewandten Endbereich besitzt der Verbindungszapfen 10 ein zylindrisches Endstück 19, das in einem umlaufenden Bund 18 übergeleitet ist. Der Bund 18 ist gegenüber dem Endstück 19 unter Bildung eines Absatzes durchmesserveringert ausgebildet. An den Bund 18 schliesst sich eine, ebenfalls durchmesserveringerte Stufe 17 an. Die Stufe 17 ist in eine Gleitfläche 16 übergeleitet. Die Gleitfläche 16 läuft an ihrem, dem Beschlagteil 40 abgewandten Ende in einer Rastnut 15 aus. Die Rastnut 15 besitzt einen Anschlag 14, der direkt an die Gleitfäche 16 angeschlossen ist. Die von dem Anschlag 14 gebildete Anschlagfläche steht im rechten Winkel oder annähernd im rechten Winkel zu der Gleitfläche 16. Auf der dem Anschlag 14 gegenüberliegenden Seite der Rastnut 15 ist eine steile Rastflanke 13 vorgesehen. Im Anschluss an die Rastflanke 13 weist der Verbindungszapfen 10 ein zylindrisches oder leicht konisches Auflager 12 auf. Dieses geht in eine Auslenkschräge 11 über. Die Auslenkschräge 11 bildet den Abschluss des Verbindungszapfens 10.

Der Verbindungszapfen 10 kann in eine Befestigungshülse 20 eingeführt werden, die im Einzelnen in der Fig. 2 dargestellt ist. Die Befestigungshülse 20 kann aus einem Kunststoffteil (beispiels-weise einem Spritzgussteil) gefertigt sein.

Die Befestigungshülse 20 gemäss Fig. 2 weist einen in Längsrichtung verlaufenden Längsschlitz 34 auf. Dieser Längsschlitz 34 erstreckt sich über die gesamte Höhe der Befestigungshülse 20 und ist lediglich in einem Teilbereich mittels eines Spannelementes 29 überbrückt. Das Spannelement 29 ist bandartig ausgebildet und einstückig an die Befestigungshülse angespritzt. Neben dem Längsschlitz 34 besitzt die Befestigungshülse 20 noch wenigstens einen weiteren Längsschlitz, so dass von der Befestigunghülse 20 Haltefedern 21 abgeteilt sind. Die Haltefedern 21 sind an ihrer Außenseite mit einer Zahnung 22 versehen. Die Zahnung 22 läuft an dem in der Fig. 2 untenliegenden Ende der Befestigungshülse 20 in einer zur Mittellängsachse der Befestigungshülse 20 geneigten Auflaufschräge 35 aus. An dem oberen Ende der Befestigungshülse 20 ist ein Passbund 23 vorgesehen. Der Passbund 23 verläuft, entsprechend der Unterteilung, die durch die Längsschlitze 34 bewirkt ist, segmentartig ringförmig um die Mittellängsachse der Befestigungshülse 20. An den Passbund 23 schliesst sich ein Auflageflansch 24 an. Dieser Auflageflansch 24 ist gegenüber dem Passbund 23 durchmesservergrössert. Am freien Ende der Befestigungshülse 20 schliesst sich ein Federelement 25 an den Auflageflansch 24 an. Das Federelement 25 steht über den Auflageflansch 24 vor und läuft ebenso wie der Passbund 23 und die Mittellängsachse der Befestigungshülse 20 um.

Die Befestigungshülse 20 umschliesst eine Aufnahme, in die der Verbindungszapfen 10 eingesteckt werden kann, wie dies später noch näher erläutert wird. Diese Aufnahme wird im Wesentlichen von den Haltefedern 21 gebildet. Im Bereich der freien Enden der Haltefedern 21 sind Rastelemente 26 gebildet. Diese Rastelemente 26 gehen, der Aufnahme der Befestigungshülse 20 zugekehrt, in eine Flanke 27 über, die gegenüber der Mittellängsachse der Befestigungshülse 20 geneigt ist. An die Flanke 28 schliesst sich eine Innenwandung 28 an, die über eine Formfläche 30 in eine durchmesservergrösserte Pressfläche 31 übergeht. Die Pressfläche 31 geht in einen Absatz 32 über. Zwischen der Pressfläche 31 und dem Absatz 32 ist ein schroffer Übergang gebildet.

Der Absatz 32 schliesst mit einer Erweiterung 33 ab, die als Einführhilfe für den Verbindungszapfen 10 dient.

Zum Fügen des Montageelementes wird der Verbindungszapfen 10 in die Befestigungshülse 20 eingeschoben. Dabei gleitet die Auslenkschräge 11 auf die Erweiterung 33 und den Absatz 32 auf. Aufgrund der Geometrieverhältnisse wird die lichte Weite des Längsschlitzes 34 im Bereich der Auflaufschräge 35 dann verkleinert. Dementsprechend vergrössert sich die lichte Weite des Längsschlitzes 34 im Bereich des Auflageflansches 24. Wenn der Verbindungszapfen 10 nun weiter in die Befestigungshülse 20 eingeschoben wird, dann wird das Spannelement 29 quer zur Längserstreckung der Befestigungshülse 20 gedehnt. Die Dehnung erfolgt dabei zumindest teilweise federelastisch. Wenn das Spannelement 29 in den Bereich der Rastnut 15 gelangt, so wirkt sich die Federelastizität derart aus, dass die Halteschenkel 21 im Bereich der Auflaufschräge 35 der Befestigungshülse 20 auseinanderklappen. Dementsprechend klappt die Befestigungshülse im Bereich des Auflageflansches 24 radial nach innen, wodurch sich der Absatz 32 der Befestigungshülse 20 in die Rastnut 15 einschiebt. Wenn der Verbindungszapfen 10 weiterbewegt wird, so gleitet der Absatz 32 über Schrägflächen der Rastnut 15 gegen den Anschlag 14. Der Anschlag 14 behindert zusammen mit dem Absatz 32 die weitere Einsetzbewegung des Verbindungszapfens 10 in die Befestigungshülse 20. Somit ist eine Vorsteckposition erreicht. In dieser Vorsteckposition verspannt das Spannelement 29 aufgrund seiner federelastischen Ausbildung den Absatz 32 gegenüber dem Anschlag 14. Hierdurch wird sichergestellt, dass die Halteschenkel 21 nicht unbeabsichtigt aufeinanderzubewegt werden können, wodurch letztendlich die von dem Absatz 32 und dem Anschlag 14 gebildete formschlüssige Verbindung aufgehoben werden würde.

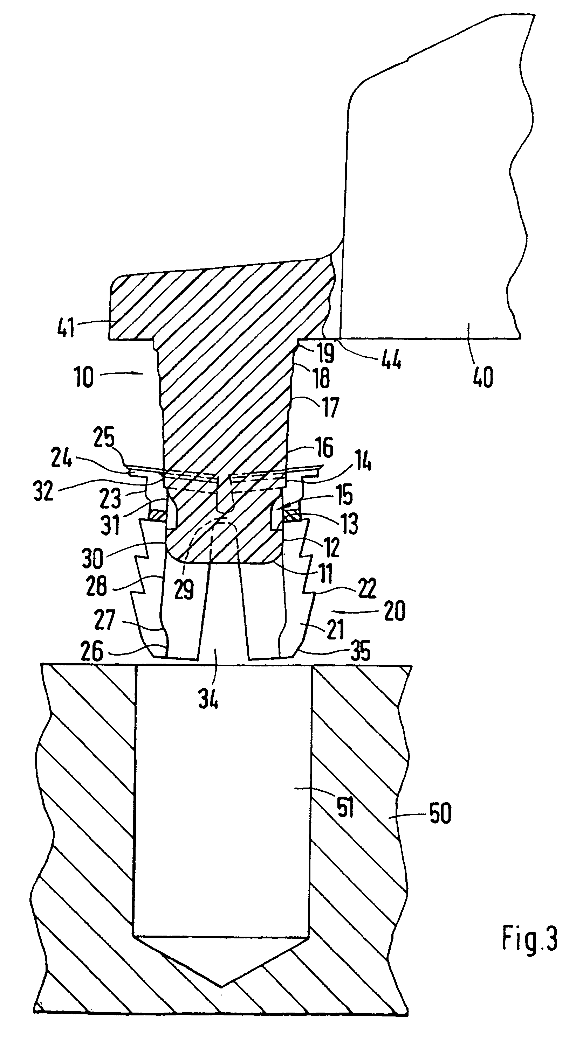

Wie die Fig. 3 weiter erkennen lässt, ist an dem Verbindungszapfen 10 ein Beschlagteil 40, beispielsweise ein Möbelbeschlagteil festgemacht. Das Beschlagteil 40 weist einen auskragenden Flansch 41 auf.

Die aus Beschlagteil 40 (mit Verbindungszapfen 10) und Befestigungshülse 20 bestehende Einheit kann an ein Werkstück 50 befestigt werden, wie dies die Fig. 3 veranschaulicht. Das Werkstück 50 ist mit einer Bohrung, vorliegend einer Sacklochbohrung 51 versehen. Zur Montage des Beschlagteiles 40 wird die Befestigungshülse 20 in die Sacklochbohrung 51 eingesetzt. Dabei gleiten zunächst die Auflaufschrägen 35 der Befestigungshülse 20 an dem Bohrungtritt der Sacklochbohrung 51 auf. Beim Aufgleiten der Auflaufschrägen 35 werden die Halteschenkel 21 radial nach innen ausgelenkt. Infolge dieser Auslenkung hebt sich die formschlüssige Verbindung ( Absatz 32 - Anschlag 14) zwischen dem Verbindungszapfen 10 und der Befestigungshülse 20 auf.

Die Befestigungshülse 20 kann nun kontinuierlich in die Sacklochbohrung 51 eingesetzt werden, wobei die Zahnung 22 der Befestigungshülse 20 an der Innenwandung der Sacklochbohrung 51 vorbeigeführt wird. Die erforderliche Fügekraft hierzu wird beispielsweise über das Befestigungsteil 40 eingeleitet. Damit nun verhindert ist, dass der Verbindungszapfen 10 in die Befestigungshülse 20 eingeschoben wird, bevor diese vollständig in die Sacklochbohrung 51 eingesteckt ist, wird der Verbindungszapfen 10 mittels der Auslenkschräge 11 an der geneigten Formfläche 30 der Befestigungshülse 20 gehalten. Die an der Formfläche 30 erzeugte Haltekraft ist dabei grösser als die zum Fügen der Befestigungshülse 20 in die Sacklochbohrung 51 erforderliche Fügekraft. Wenn nun die Befestigungshülse 20 vollständig in die Sacklochbohrung 51 eingesteckt ist, so legt sich der Auflageflansch 24 im Bereich um den Bohrungseintritt der Sacklochbohrung 51 auf die Oberseite des Werkstückes 50 auf. Nun kann die Fügekraft erhöht werden, so dass sich der Verbindungszapfen 10 über die Formfläche 30 hinwegschiebt. Beim Einschieben des Verbindungszapfens 10 werden nun die Halteschenkel 21 radial nach außen verspreizt. Dies wird im Einzelnen dadurch bewirkt, dass die Gleitfläche 16 auf die Innenwandung 28 der Befestigungshülse 20 aufläuft. Die Zahnung 22 kann dabei ein Stück weit in die Oberfläche der Innenwandung der Sacklochbohrung 51 eindringen und sich hier widerhakenartig verkrallen. Wenn der Verbindungszapfen 10 mit seiner Auflaufschräge 11 an der Innenwandung 28 der Befestigungshülse 20 vorbeigeführt ist, gelangt er in Eingriff mit der Flanke 27. Dann werden die Halteschenkel 21 im Bereich ihrer freien Enden um einen virtuellen Drehpunkt nach außen geschwenkt. Der virtuelle Drehpunkt ist dabei in etwa in Höhe des ersten Zahnes der Zahnung 22 angeordnet. Nachdem das Außenlager 12 des Verbindungszapfens 10 die Rastelemente 26 der Halteschenkel 21 passiert hat, schnappen diese Rastelemente 26 in die Rastnut 15 ein. Gleichzeitig legen sich die Stirnseiten der Halteschenkel 21, die in etwa rechtwinklig zur Mittellängsachse der Befestigungshülse 20 stehen, an die steilen Rastflanken 13 des Verbindungszapfens 10 an. Damit wird dann verhindert, dass der Verbindungszapfens 10 aus der Aufnahme der Befestigungshülse 20 herausgezogen werden kann, wodurch eine feste Anbindung des Beschlagteiles 40 an dem Werkstück 50 möglich wird.

Um ein eventuelles Spiel auszugleichen, das im Bereich der Rastnut 15 zwischen dem Verbindungszapfen 10 und der Befestigungshülse 20 auftritt, legt sich das Federelement 25 an der Anlagefläche 44 des Befestigungsteiles 40 an. Damit wird das Befestigungsteil 40 in Achsrichtung des Verbindungszapfens 10 gegenüber dem Werkstück 50 verspannt.

Die Befestigungshülse 20 weist im Bereich ihres Passbundes 23 einen Außendurchmesser auf, der geringfügig grösser gewählt ist, als der Innendurchmesser der Sacklochbohrung 51. Beispielsweise kann die Sacklochbohrung 51 ein Durchmessermass von 8mm, der Passbund 23 ein Durchmessermass von 8,1-8,2mm aufweisen. Aufgrund dieser masslichen Auslegung wird der Passbund 23 bei gefügter Befestigungshülse 20 radial nach innen verformt. Diese radiale Verformung bewirkt, dass der Passbund 23 an dem Bund 18 des Verbindungszapfens 10 angepresst wird. Über diese Verpressung wird eine wackelfreie Verspannung des Verbindungszapfens 10 bewirkt.

Es hat sich gezeigt, dass die Erstreckung des Rastelementes 26 in Richtung der Mittellängsachse des Verbindungszapfens 10 abhängig vom verwendeten Kunststoff mindestens 0,2 mm bis 1 mm betragen muss, damit eine ausreichende Abschersicherheit gegeben ist.

## Patentansprüche

1. Montageelement zum Befestigen eines Beschlagteils (40) in einer Bohrung (51) eines Werkstückes (50), insbesondere für den Möbelbau, wobei in die Bohrung (51) eine Befestigungshülse (20) einführbar ist, die durch Längsschlitze (34) in auslenkbare Halteschenkel (21) unterteilt ist, und wobei in die Aufnahme der Befestigungshülse (20) ein am Beschlagteil (40) angeformter Verbindungszapfen (10) einsetzbar ist, der mittels einer Auslenkschräge (11) die Halteschenkel (21) auslenkt und die Befestigungshülse (20) in der Bohrung (51) des Werkstückes (50) festlegt,
**dadurch gekennzeichnet,**
**dass** die Längsschlitze (34) der Befestigungshülse (20) mittels quer zu deren Längsrichtung gerichteter dehnbarer Spannelemente (29) unterteilt und die Halteschenkel (21) zusammengehalten sind,
**dass** die Aufnahme der Befestigungshülse (20) in dem vor den Spannelementen (29) liegenden Einführabschnitt einen Rastabsatz (32) aufweist, der mit einem Rastanschlag (14) einer nach der Auslenkschräge (11) am freien Ende des Verbindungszapfens (10) vorgesehenen Rastnut (15) eine Vorsteckposition zwischen Verbindungszapfen (10) und Befestigungshülse (20) festlegt und
**dass** nach den Spannelementen (29) das Ende der Befestigungshülse (20) Rastelemente (26) aufweist, in die die Rastnuten (15) des Verbindungszapfens (10) einrasten und die Montage-Endstellung festlegen.

2. Montageelement nach Anspruch 1,
**dadurch gekennzeichnet,**
**dass** die Befestigungshülse (20) im Bereich der Außenseiten der Halteschenkel (21) Zahnungen (22) aufweist.

3. Montageelement nach Anspruch 1 oder 2,
**dadurch gekennzeichnet,**
**dass** der Verbindungszapfen (10) eine glatte Gleitfläche (16) aufweist, die auf einer ebenfalls glatten Innenwandung (28) der Befestigungshülse(20) beim Einschieben des Verbindungszapfens (10) in die Befestigungshülse (20) abgleitet.

4. Montageelement nach einem der Ansprüche 1 bis 3,
**dadurch gekennzeichnet,**
**dass** der Verbindungszapfen (10) und/oder die Befestigungshülse (20) eine Auslösevorrichtung (35, 29) aufweist, mittels der die Verbindung zwischen dem Verbindungszapfen (10) und der Befestigungshülse (20) auslösbar ist.

5. Montageelement nach einem der Ansprüche 1 bis 4,
**dadurch gekennzeichnet,**
**dass** die Außenseiten der freien Enden der Halteschenkel (21) als Auflaufschräge (35) ausgebildet sind.

6. Montageelement nach Anspruch 5,
**dadurch gekennzeichnet,**
**dass** der Verbindungszapfen (10) bei aufgehobener formschlüssiger Verbindung zwischen Verbindungszapfen (10) und Befestigungshülse (20) an einer Formfläche (30) der Befestigungshülse (20) gehalten ist, wobei die an der Formfläche (30) erzeugte Haltekraft grösser ist, als die zum Einsetzen der Befestigungshülse (20) in die Bohrung (51) des Werkstückes (50) erforderliche Fügekraft.

7. Montageelement nach einem der Ansprüche 1 bis 6,
**dadurch gekennzeichnet,**
**dass** die Befestigungshülse (20) an ihrem dem Befestigungsteil (40) zugewandten Endbereich ein Federelement (25) aufweist, das gegen eine Anlagefläche (44) des Befestigungsteiles (40) in Achsrichtung des eingedrückten Verbindungszapfen (10) verspannt ist.

8. Montageelement nach einem der Ansprüche 1 bis 7,
**dadurch gekennzeichnet,**
**dass** die Befestigungshülse (20) einen Passbund (23) aufweist, dessen Außendurchmesser gegenüber dem Innendurchmesser der Bohrung (51) ein Übermass aufweist,
**dass** die Befestigungshülse (20) im Bereich ihres Passbundes (23) an der Bohrung (51) radial nach innen verformbar ist, und
**dass** der in der Aufnahme der Befestigungshülse (20) eingesteckte Verbindungszapfen (10) im Bereich des Passbundes (23) infolge der Verformung der Befestigungshülse (20) geklemmt gehalten ist.

## Claims

1. Mounting element for securing a fitting (40) in a bore (51) of a workpiece (50), more especially for the construction of furniture, wherein a fastening sleeve (20), which is divided by elongate slots (34) into deflectable retaining portions (21), is introducible into the bore (51), and wherein a connecting pin (10), which is integrally formed on the fitting (40), is insertable into the receiving means of the fastening sleeve (20), said connecting pin (10) deflecting the retaining portions (21) by means of a deflection inclination (11) and securing the fastening sleeve (20) in the bore (51) of the workpiece (50), **characterised in that** the elongate slots (34) of the fastening sleeve (20) are divided by means of spanning elements (29), which are extensible and are orientated transversely relative to the longitudinal direction of the fastening sleeve, and the retaining portions (21) are held together, **in that** the receiving means of the fastening sleeve (20) has a locking projection (32) in the lead-in portion, which is situated in front of the spanning elements (29), which locking projection (32), with a locking stop member (14) of a locking groove (15), which is provided after the deflecting inclination (11) at the free end of the connecting pin (10), secures a preliminary plug-in position between connecting pin (10) and fastening sleeve (20), and **in that** after the spanning elements (29) the end of the fastening sleeve (20) has locking elements (26), in which the locking grooves (15) of the connecting pin (10) engage and secure the final mounting position.

2. Mounting element according to claim 1, **characterised in that** the fastening sleeve (20) has toothing (22) in the region of the outsides of the retaining portions (21).

3. Mounting element according to claim 1 or 2, **characterised in that** the connecting pin (10) has a smooth sliding face (16), which slides on an equally smooth inner wall (28) of the fastening sleeve (20) when the connecting pin (10) is inserted into the fastening sleeve (20).

4. Mounting element according to one of claims 1 to 3, **characterised in that** the connecting pin (10) and/or the fastening sleeve (20) has a releasing apparatus (35, 29), by means of which the connection between the connecting pin (10) and the fastening sleeve (20) is releasable.

5. Mounting element according to one of claims 1 to 4, **characterised in that** the outsides of the free ends of the retaining portions (21) are in the form of leading inclination (35).

6. Mounting element according to claim 5, **characterised in that**, when the form-locking connection between connecting pin (10) and fastening sleeve (20) has been eliminated, the connecting pin (10) is retained on a shaped face (30) of the fastening sleeve (20), wherein the retaining force created at the shaped face (30) is greater than the joining force necessary for inserting the fastening sleeve (10) into the bore (51) of the workpiece (50).

7. Mounting element according to one of claims 1 to 6, **characterised in that** at its end region facing the fastening part (40), the fastening sleeve (20) has a resilient element (25), which is tensioned against a contact face (44) of the fastening part (40) in the direction of the axis of the connecting pin (10), which is inserted under pressure.

8. Mounting element according to one of claims 1 to 7, **characterised in that** the fastening sleeve (20) has a fitting collar (23), the outer diameter of which is oversized compared with the internal diameter of the bore (51), **in that** the fastening sleeve (20) is deformable radially inwards at the bore (51) in the region of its fitting collar (23), and **in that** the connecting pin (10), which is inserted in the receiving means of the fastening sleeve (20), is retained in a clamped manner in the region of the fitting collar (23) on account of the deforming of the fastening sleeve (20).

## Revendications

1. Elément de montage utilisé pour la fixation d'une pièce de garniture (40) dans un alésage (51) d'une pièce à usiner (60), notamment pour la fabrication de meubles, sachant qu'une douille de fixation (20) peut être introduite dans l'alésage, laquelle douille est divisée par des fentes oblongues (34) en branche de retenue orientable (21) et sachant que dans le logement de la douille de fixation (20) un pivot de liaison (10) moulé sur la pièce de garniture (40) peut être installé, qui dévie la branche de retenue (21) au moyen d'un chanfrein de déviation (11) et détermine la douille de fixation (20) dans l'alésage (51) de la pièce à usiner (50),
**caractérisé en ce**
**que** les fentes oblongues (34) de la douille de fixation (20) sont subdivisées par des éléments de fixation extensibles (29) dirigés transversalement par rapport à leur direction longitudinale et que les branches de retenue (21) sont maintenues ensemble,
**que** le logement de la douille de fixation (20) dans le segment d'introduction se trouvant devant les éléments de fixation (29) présente un palier à crans (32), qui détermine avec une butée à crans (14) d'une rainure à encoches (15) prévue après le chanfrein de déviation (11) sur l'extrémité libre du pivot de liaison (10) une position de retenue entre le pivot de liaison (10) et la douille de fixation (20) et
**qu'**après les éléments de fixation (29) l'extrémité de la douille de fixation (20) présente des éléments à crans, dans lesquels les rainures à encoches (15) du pivot de liaison (10) s'enclenchent et déterminent la position définitive du montage.

2. Elément de montage selon la revendication 1,
**caractérisé en ce**
**que** la douille de fixation (20) présente des entailles (22) dans la zone des côtés extérieurs de la branche de retenue (21).

3. Elément de montage selon les revendications 1 ou 2,
**caractérisé en ce**
**que** le pivot de liaison (10) présente une surface de glissement lisse (16) qui glisse sur une paroi interne également lisse (28) de la douille de fixation (20) en introduisant le pivot de liaison (10) dans la douille de fixation (20).

4. Elément de montage selon l'une des revendications 1 à 3,
**caractérisé en ce**
**que** le pivot de liaison (10) et/ou la douille de fixation (20) présente un dispositif de déclenchement (35, 29), au moyen duquel la liaison peut être déclenchée entre le pivot de liaison (10) et la douille de fixation (20).

5. Elément de montage selon l'une des revendications 1 à 4,
**caractérisé en ce**
**que** les côtés extérieurs des extrémités libres de la branche de retenue (21) sont configurés comme des chanfreins inclinés (35).

6. Elément de montage selon la revendication 5,
**caractérisé en ce**
**que** le pivot de liaison (10) est maintenu lors d'un raccordement asservi avec coopération des formes entre le pivot de liaison (10) et la douille de fixation (20), sachant que la résistance produite à la surface du moule (30) est plus grande que la force d'assemblage nécessaire pour l'installation de la douille de fixation (20) dans l'alésage (51) de la pièce à usiner.

7. Elément de montage selon l'une des revendications 1 à 6,
**caractérisé en ce**
**que** la douille de fixation (20) présente sur sa zone tournée vers la pièce de fixation (40) un élément à ressort (25), qui est calé contre une face de départ de la pièce de fixation (40) dans le sens de l'axe du pivot de liaison (10) enfoncé.

8. Elément de montage selon l'une des revendications 1 à 7,
**caractérisé en ce**
**que** la douille de fixation (20) présente un collet d'adaptation (23), dont le diamètre extérieur présente une surdimension par rapport au diamètre intérieur de l'alésage (51),
**que** la douille de fixation (20) est déformable dans le sens radial vers l'intérieur dans la zone de son collet d'adaptation (23) sur l'alésage (51), et
**que** le pivot de liaison (10) fiché dans le logement de la douille de fixation (20) est maintenu attaché dans la zone du collet d'adaptation (23) à la suite de la déformation de la douille de fixation (20).
